# EUROPEAN PATENT APPLICATION

(11) **EP 3 747 699 A1**
(43) Date of publication of application: **09.12.2020**
(21) Application number: 20000102.2
(22) Date of filing: 10.03.2020
(51) Int. Cl.: B60Q 1/44

(54) **WIRING OF FRONT BRAKING LIGHTS FOR VEHICLES**

(30) Priority: 08.06.2019 SK 500392019
(71) Applicant: Lumaco Innovations AG, 8832 Wollerau (CH)
(72) Inventor: Marjak, L'ubomír, CH-8808 Pfäffikon (CH); Garaj, Josef, 023 51 Raková (SK)
(74) Representative: Soukup, Petr

(57) **Abstract**

The wiring of front braking lights for vehicles refers to a front light signalling device for transport vehicles in road traffic. The device consists of a power supply to which at least one red rear stop lamp is electrically connected via a brake switch arranged in series and actuated by brake pedal or a pull rod from the vehicle and via the vehicle's main control unit. Downward of braking switch (2), the input of at least one green front stop lamp (6) is electrically connected in parallel to the red rear stop lamp (4) via auxiliary control unit (5), the input of which is connected upstream or downstream of the vehicle's main control unit (3), with the output of the at least one green front stop lamp (6) connected to the power negative pole of the vehicle power supply (1), and the vehicle's main control unit (3) and auxiliary control unit (5) electrically connected to the vehicle power supply (1)

## Description

### Field of the Invention

The invention falls within the sphere of road transport and concerns a front light signalling device of the vehicle braking for transport vehicles in road traffic.

### Background of the Invention

By now on a prevalent basis, only rear braking lights have been used in road transport vehicles. An electrical brake switch is connected via wires to the vehicle power supply, and is triggered with each braking instance by changing the position of the brake actuator, such as a pedal. This includes at least one light bulb mounted in the rear of the vehicle under a red translucent cover and/or behind the rear window of the vehicle, or with a red surface, which is connected via electrical wires from the vehicle's electrical brake switch. Alternatively, the stop lamp may consist of a system of separate rear stop lamps interconnected in parallel and to the vehicle power supply. The main function of the stop lamps is to warn the driver of the vehicle behind the braking vehicle in a timely manner of the slowing down. A major disadvantage of this design is that it only warns in a timely manner the driver behind the braking vehicle but not drivers or other road users in front of and/or on the sides of the braking vehicle in critical traffic situations, especially in the city, i. e., with the driver of the front vehicle not aware of the deceleration of the rear vehicle, especially with autonomous driving, before an intersection, before joining desired traffic lanes, when overtaking another vehicle, when joining traffic lanes or the main road from a side road, or turning to a side road. Pedestrians also are not aware of deceleration of the vehicle, especially with autonomous driving, before a pedestrian crossing etc.

From Patent DE3601029 (A1), the use of a front stop lamp is known located in the centre of the front part for all motor vehicles, which adversely affects the design of the vehicle, and from Patent CA2271578, the use of a spot front stop lamp located in two small openings in the central front part of the motor vehicle, which is not too apparent to the outside observer. Neither of the two solutions contains a specific proposal for the wiring of such light signalling to the electrical circuit of the automobile.

Further from Patent US5966073, a complete lighting solution for motor vehicles is known, including illumination with blue stop lamps on the front and/or side of the vehicle, with the stop lamps generally operable regardless of whether or not the vehicle ignition is on.

From Patent BE1014799, also a front stop lamp is known operating simultaneously with rear stop lamps, with the colour compatible with national automobile regulations, i. e. red. However, the identical colour coding of all stop lamps may be confused in operation with similarly coloured side marker lights, turn signals and side turn signals of the automobile.

From Technical Solution SK UV 3900 and Patent CN2659744 (Y), a device is known for front and/or side light signalling of the vehicle braking, consisting of the vehicle's electrical brake switch, electrical conductors and at least one lamp mounted under a coloured translucent cover, to which from the vehicle's electrical brake switch operated by the vehicle brake pedal, via wiring at least one lamp is electrically connected that is located on the front and/or side of the vehicle and mounted under a coloured translucent cover. The electrical connection of the vehicle's front brake lights is via a conductor downstream of the brake switch in parallel to the connected red rear stop lamp, which may also consist of a system of rear stop lamps interconnected in parallel and to the vehicle power supply. Such a technical solution, however, puts a significant strain on the electrical circuit in terms of current load with at least one red stop lamp connected, thereby causing errors reported in the vehicle's main control unit as faulty connection of the front signalling lights and overload of the common part of the electrical circuit connected to the vehicle power supply. All of this substantially reduces reliability and drives failure rate in signalling in the two brake circuits and the vehicle's overall failure rate.

Alternatively under Technical Solution SK UV 3900, the electrical connection of the device's lamp for the front and/or side braking lights of the vehicle can also be from a separate electrical brake switch operated by the vehicle brake pedal, through a separate line for the front and/or side lamp of the braking lights independent of wiring for the rear lamp of the braking lights. The drawback of such a solution is the need to ensure in electromechanical terms identical operation of two separate electrical brake switches mounted in parallel and actuated by the vehicle brake pedal, and pertinent increase in the vehicle's overall failure rate.

### Summary of the Invention

The drawbacks outlined are largely eliminated by wiring the vehicle's front braking lights so that the system consists of power supply to which at least one red rear stop lamp is electrically connected via a brake switch arranged in series and actuated by brake pedal or pull rod from the vehicle and via the vehicle's main control unit. Under the invention, there is downstream of the brake switch electrical connection in parallel to the red rear stop lamp of input of at least one green front stop lamp via an auxiliary control unit. The input of the auxiliary control unit is connected upstream or downstream of the vehicle's main control unit, and the output of at least one green front stop lamp is connected to the power negative pole of the vehicle power supply. The vehicle's main control unit and the auxiliary control unit are electrically connected to the vehicle power supply.

The drawbacks outlined are largely eliminated by wiring the vehicle's front braking lights in accordance with the technical solution that consists of a power supply to which at least one red rear stop lamp is electrically connected via a brake switch actuated by brake pedal or pull rod from the vehicle and via the vehicle's main control unit. Under the technical solution, there is downstream of the brake switch connected via the vehicle's main control unit electrical connection in parallel to the red rear stop lamp of input of at least one green front stop lamp via an auxiliary control unit The input of the auxiliary control unit is connected upstream or downstream of the vehicle's main control unit, and the output is connected to the power negative pole of the vehicle power supply. The vehicle's main control unit and the auxiliary control unit are electrically connected to the vehicle power supply.

The technical solution only puts a minimal strain on the electrical circuit in terms of current load with at least one red stop lamp connected, thus eliminating pertinent errors reported in the vehicle's main control unit as faulty connection of the vehicle's front signalling lights. Another advantage of the technical solution is that the green front stop lamp is connected to the vehicle's power supply independently and separately from the connection of the other vehicle lights, including the red rear stop lamp. At the same time, these aspects substantially improve reliability and reduce the failure rate of signalling in the two brake circuits as well as the vehicle's overall failure rate at low pertinent acquisition cost.

### Brief Description of the Drawings

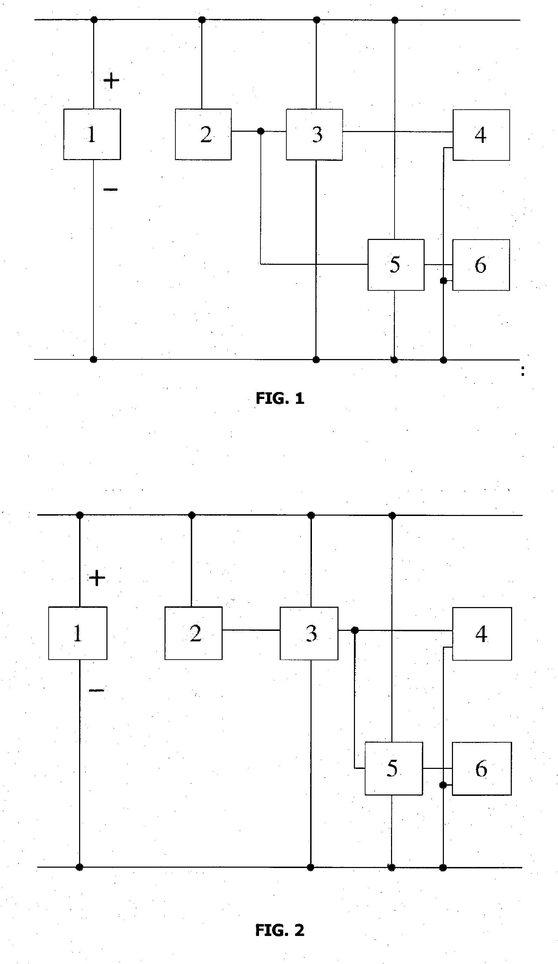

Fig. 1 shows a schematic block diagram of wiring of the vehicle front braking lights under the technical solution where downward of the brake switch and before the vehicle's main control unit, input is electrically connected in parallel to the red rear stop lamp of auxiliary control unit for the front stop lamp, with the auxiliary control unit and the green front stop lamp output electrically connected to the vehicle power supply. Further Fig. 2 shows a schematic block diagram of alternative wiring of the vehicle front braking lights where downward of the brake switch and the vehicle's main control unit, input is electrically connected in parallel to the red rear stop lamp of auxiliary control unit for the front stop lamp, with the auxiliary control unit and the green front stop lamp output electrically connected to the vehicle power supply.

### Implementation Examples

The subject matter of the invention is illustrated in the following examples. Fig. 1 shows wiring of the vehicle front braking lights according to the technical solution, consisting of power supply 1, such as a battery, a dynamo or alternator etc., to which the red rear stop lamp 4 is electrically connected via brake switch 2 actuated by brake pedal (not shown) or a pull rod from the vehicle, and via the vehicle's main control unit 3. Downstream of the brake switch 2, the green front stop lamp 6 input is electrically connected in parallel to the red rear stop lamp 4 via auxiliary control unit 5, with the electrical circuit comprising a relay or transistor or a microprocessor etc., and with the input connected upstream of the vehicle's main control unit 3, and the output of the green front stop lamp 6 is connected to the power negative pole of the vehicle power supply 1, while the vehicle's main control unit 3 and auxiliary control unit 5 are electrically connected to the vehicle power supply 1.

When the vehicle is braking by pushing the brake pedal (not shown) or pulling the rod, the brake switch 2 electrically connects the red rear stop lamp 4 to the vehicle power supply 1 and the lamp lights up. The resulting electric current flow in the electrical circuit is fed to the input of auxiliary control unit 5, the output of which switches on the green front stop lamp 6 fed from the vehicle power supply 1 and the lamp lights up.

Fig. 2 shows alternative wiring of the vehicle front braking lights under the technical solution, consisting of power supply 1, such as a battery, a dynamo or alternator etc., to which the red rear stop lamp 4 is electrically connected via brake switch 2 actuated by brake pedal (not shown) or a pull rod from the vehicle, and via the vehicle's main control unit 3. Downstream of the brake switch 2, the green front stop lamp 6 input is electrically connected in parallel to the red rear stop lamp 4 via auxiliary control unit 5, with the electrical circuit comprising a relay or transistor or a microprocessor etc., with the input connected downstream of the vehicle's main control unit 3, and the output of the green front stop lamp 6 is connected to the power negative pole of the vehicle power supply 1, while the vehicle's main control unit 3 and auxiliary control unit 5 are electrically connected to the vehicle power supply 1.

When the vehicle is braking by pushing the brake pedal (not shown) or pulling the rod, the brake switch 2 electrically connects the red rear stop lamp 4 to the vehicle power supply 1 and the lamp lights up. The resulting electric current flow in the electrical circuit is fed via the vehicle's main control unit 3 to the input of auxiliary control unit 5, the output of which switches on the green front stop lamp 6 fed from the vehicle power supply 1 and the lamp lights up.

The described and illustrated implementations are not the only ones possible under the invention, as the red rear stop lamp 4 may consist of a system of rear stop lamps 4 interconnected in parallel, which also may consist each of several lamps as well, while the red rear stop lamp may consist of white light (filament lamp) mounted in a red transparent housing, and/or the green front stop lamp 7 may consist of a system of multiple lamps, which may also consist of white light (filament lamps) mounted in a green transparent housing.

### Industrial Usability

The wiring of the vehicle front braking light signals can be used in all types of freight, passenger and public transport vehicles, trams, motorcycles and other special road transport vehicles, including autonomous transport vehicles.

## Claims

1. Wiring of the vehicle front braking lights comprising a power supply to which at least one red rear stop lamp is electrically connected via a brake switch arranged in series and actuated by brake pedal or a pull rod from the vehicle and via the vehicle's main control unit, **distinguished by the fact that** the input of at least one green front stop lamp (6) is electrically connected in parallel to the red rear stop lamp (4) downstream of the brake switch (2) via auxiliary control unit (5) the input of which is connected upstream or downstream of the vehicle's main control unit (3), while the output of at least one green front stop lamp (6) is connected to the power negative pole of the vehicle power supply (1), and the vehicle's main control unit (3) and auxiliary control unit (5) are electrically connected to the vehicle power supply (1)
